# EUROPÄISCHE PATENTSCHRIFT

(11) **EP 1 861 298 B1**
(45) Veröffentlichungstag und Bekanntmachung des Hinweises auf die Patenterteilung: **14.07.2010**
(21) Anmeldenummer: 05816598.6
(22) Anmeldetag: 05.12.2005
(51) Int. Cl.: B60T 8/40, F04B 1/00, F04B 53/16

(54) **DRUCKERZEUGERSYSTEM FÜR EINE FAHRZEUGBREMSANLAGE UND MONTAGEVERFAHREN FÜR DAS DRUCKERZEUGERSYSTEM**
PRESSURE GENERATOR SYTEM FOR A VEHICLE BRAKE SYSTEM AND METHOD FOR MOUNTING SAID PRESSURE GENERATOR SYSTEM
SYSTEME DE GENERATEUR DE PRESSION POUR SYSTEME DE FREINAGE DE VEHICULE ET PROCEDE POUR MONTER CE SYSTEME DE GENERATEUR DE PRESSION

(30) Priorität: 06.12.2004 DE 102004058726
(43) Veröffentlichungstag der Anmeldung: 05.12.2007
(73) Patentinhaber: Lucas Automotive GmbH, 56070 Koblenz (DE)
(72) Erfinder: GIERING, Wilfried, 56743 Mendig (DE); SEIBERT, Werner, 56206 Kammerforst (DE); OHLIG, Benedikt, 56179 Vallendar (DE); GILLES, Leo, 56077 Koblenz (DE); KNECHTGES, Josef, 56727 Mayen (DE)
(74) Vertreter: Röthinger, Rainer
(86) Internationale Anmeldenummer: PCT/EP2005/013028
(87) Internationale Veröffentlichungsnummer: WO 2006/061178

(56) Entgegenhaltungen:
- EP-A- 0 354 725
- WO-A-90/04530
- WO-A-94/27045
- WO-A-97/13067
- DE-A1- 2 146 079
- DE-A1- 4 015 786
- DE-A1- 19 948 445
- DE-A1- 19 961 851
- DE-B3- 10 302 681
- US-A- 5 601 345

## Beschreibung

### Gebiet der Erfindung

Die Erfindung betrifft ein Druckerzeugersystem für eine hydraulische oder elektrohydraulische Fahrzeugbremsanlage. Die Erfindung betrifft ferner ein Montageverfahren für dieses Druckerzeugersystem.

### Hintergrund der Erfindung

Moderne hydraulische oder elektrohydraulische Fahrzeugbremsanlagen erfordern zuverlässige Druckerzeuger, um sicherheitsrelevante Systeme wie ein hydraulisches Bremskraftverstärkersystem, ein Antiblockiersystem (ABS), ein System zur Abstandsregelung (ACC) oder ein Antriebsschlupf-Regelsystem (ASR) implementieren zu können. Bei diesen Systemen wird mittels des Druckerzeugers ein Hydraulikdruck zur Ansteuerung einer oder mehrerer Radbremsen generiert.

In der Vergangenheit wurden zur Bereitstellung des Hydraulikdrucks häufig Druckspeicher des Membrantyps verwendet, wie sie in der DE 101 46 367 A beschrieben sind. Derartige Druckspeicher werden mittels einer Pumpe mit Hydraulikfluid geladen, speichern das Hydraulikfluid bei einem vorgegebenen Druck und führen das unter Druck stehende Hydraulikfluid beispielsweise bei einem ABS-Regeleingriff dem Bremskreislauf zu. Vorteilhaft ist hierbei, dass der Fluidstrom vom Druckspeicher pulsationsfrei in den Bremskreislauf eingespeist wird, so dass der Fahrer des Kraftfahrzeugs von dem Regeleingriff häufig unmittelbar gar nichts wahrnimmt.

Aus Kostengründen sowie aufgrund der nachteiligen Alterungseffekte der Druckspeichermembran wurde darüber nachgedacht, auf den Druckspeicher zu verzichten und den Hydraulikdruck im Bedarfsfall unmittelbar mittels einer Pumpe zu erzeugen. Bei herkömmlichen Pumpen wurde allerdings beobachtet, dass diese bei Regeleingriffen hohe Druckpulsationen generieren. Derartige Druckpulsationen verringern in manchen Situationen den Betriebskomfort, da sie vom Fahrer als Fehlfunktion interpretiert werden und außerdem häufig mit unangenehmen Geräuschen einhergehen.

Es wurde festgestellt, dass sich ein höherer Betriebskomfort bei einem Austausch der herkömmlichen (Einkolben-)Pumpen durch Mehrkolbenpumpen einstellt. Bei Mehrkolbenpumpen lassen sich die einzelnen Kolben asynchron ansteuern, so dass Druckpulsationen aufgrund der Überlagerung von Saug- und Druckhüben der einzelnen Zylinder/Kolben-Anordnungen deutlich geglättet werden.

Bekannte Mehrkolbenpumpen weisen aufgrund der Mehrzahl von Pumpenkolben jedoch häufig einen komplexen und daher kostenintensiven und wenig montagefreundlichen Aufbau auf, zumal die Pumpenkolben antriebsgerecht untergebracht werden müssen und häufig eine Vielzahl von Verbindungskanälen sowohl zwischen den einzelnen Zylinder/Kolben-Anordnungen als auch zu Fluidanschlüssen ausgebildet werden müssen. Aber auch bei Einkolbenpumpen ist die Montage und vor allem der Austausch des Druckerzeugers nicht einfach.

So wird in DE 2146079 ein Blockierüberwachungsventilaggregat beschrieben, das aus einem Gehäuseblock und einer darin eingefügten 4-Kolben-Pumpe besteht. Dabei dient das Ringgehäuse der 4-Kolben-Pumpe auch als Deckel einer Federkammer des Aggregates. Die Saugventile der Pumpe sind dabei direkt an die Federkammer angeschlossen. Die Druckventile befinden sich zwischen Ringgehäuse und Gehäuseblock. Zusätzlich ist ein Elektromotor zum Antrieb der 4-Kolben-Pumpe vorgesehen, dessen Gehäuse zusammen mit dem Ringgehäuse mit dem Gehäuseblock verbunden ist.

In WO 97/13067 wird ein Elektromotor-Hydraulikpumpen-Aggregat beschrieben, bei dem das Pumpengehäuse aus Kunststoff besteht und derart in den Gehäusemantel des Elektromotors eingeschoben ist, dass der Gehäusemantel des Elektromotors das Pumpengehäuse von außen umfasst und ihm damit Stabilität verleiht. Die Pumpenbohrungen sind radial nach außen geführt und durch Stopfen verschlossen, die an der Innenseite des Elektromotorgehäuses anliegen.

In US 5,601,345 wird eine Kolbenpumpe eines Antiblockiersystems beschrieben. Diese Kolbenpumpe besteht dabei aus einem Pumpengehäuse, einem Exzenter, einem Kolben mit Rückstellfeder und Ein- und Auslassventilen. Der Kolben befindet sich im direkten Kontakt mit dem Exzenter und überträgt dessen oszillierenden Bewegungen. Dabei bewegt sich der Kolben in einer gestuften Bohrung des Pumpengehäuses, die den Verdichtungsraum mit dem "Exzenterraum" verbindet. Um eine Leckage und einen damit verbundenen Druckverlust vom Verdichtungsraum hin zum "Exzenterraum" zu unterbinden, wird zusätzlich zum Kolben eine stationäre Dichtung vorgeschlagen, die an dem Stufenabsatz der gestuften Bohrung angebracht ist.

In DE 199 48 445 A1 wird eine besonders geräuscharme Pumpe für ein geregeltes Bremssystem offenbart. Diese Pumpe ist eine Radialkolbenpumpe mit sechs sternförmig angeordneten Kolben. Dabei sind jeweils zwei gegenüberliegende Pumpenblöcke durch Kuppelringe miteinander gekoppelt.

In DE 199 61 851 A1 wird eine pulsationsfreie Radialkolbenpumpe für geregelte Bremssysteme beschrieben. Um Pulsationen im Fördervolumen der Pumpe zu verhindern, soll das Kolbenhubprofil derart drehwinkelabhängig gesteuert werden, dass der Summenwert unabhängig von der Phasenlage des Pumpenantriebs ist. Dazu wird vorgeschlagen, die Nockenkontur und die Kolbenform speziell aneinander anzupassen. So ist der Bereich des Kolbens der im direkten Kontakt zum Nocken steht nicht eben sondern kegelförmig gestaltet.

In EP 0 254 725 A1 wird eine Hydraulikpumpen- und Motoranordnung für ein Fahrzeughydrauliksystem beschrieben. Dabei ist die Bewegung der Kolben radial nach innen, zum Exzenter hin, beschränkt, so dass auch nach einem Entfernen des Exzenters die Rückstellfedern die Kolben nicht vollständig aus den jeweiligen Bohrungen drücken können.

In DE 40 15 786 A1 wird eine kolbenbetriebene Hydraulikpumpe beschrieben, bei der das Saugventil durch den Abwärtshub des Kolbens geöffnet wird und der Einströmwiderstand des Saugventils im Ansaugvorgang minimiert wird. Dafür sind zusätzlich zum Kolben ein Stempel und eine separate Rückstellfedern für den Stempel vorgesehen. Dabei weist die Rückstellfeder des Kolbens eine größere Federkraft als die Rückstellfeder des Stempels auf. Kolben und Stempel sind derart angeordnet, dass beim Druckaufbau ein direkter Kontakt zwischen Kolben und Stempel entsteht. Während des Ansaugvorganges bildet sich aufgrund der unterschiedlichen Federkräfte der Rückstellfedern ein Spalt zwischen Kolben und Stempel. Dieser Spalt verbindet die Ansaugöffnung mit der Pumpenkammer, so dass Hydraulikfluid in die Pumpenkammer strömen kann.

In WO 94/27045 wird ein Aggregat beschrieben, das aus einer Hydraulikpumpe und einem Motor besteht. Dabei wird die Motorwelle in insgesamt drei Lagern gelagert. Dies sind Hauptlager, Pumpenlager und Hilfslager. Hauptlager und Pumpenlager sind am Pumpengehäuse abgestützt, so dass beim Betrieb der Hydraulikpumpe die Lagerkräfte in das massive Pumpengehäuse eingeleitet werden. Um den Motor auch separat testen zu können, ist das am Motorgehäuse abgestützte Hilfslager vorgesehen.

In DE 103 02 681 B3 wird ein Hydraulikaggregat für eine elektronisch steuerbare Fahrzeugbremsanlage beschrieben. Dieses Hydraulikaggregat umfasst einen Gehäuseblock mit einer daran ausgebildeten Anbaufläche für einen Elektromotor und ein elektrisches Steuergerät. Zusätzlich sind Dämpfungseinrichtungen zum Dämpfen von betriebsbedingten Druckpulsationen und Geräuschen vorgesehen. Diese Dämpfungseinrichtungen stehen dabei über die Anbauflächen über.

In WO 90/04530 wird ein adaptives Bremssystem beschrieben, in dem eine Hydraulikpumpe zusätzlichen Hydraulikdruck bereitstellt. Dieser Hydraulikdruck kann dabei entweder in den Hauptbremszylinder oder über elektrisch gesteuerte Ventile direkt in die Radbremsen eingespeist werden. Darüber hinaus ist die Pumpe derart mit den Radbremsen verbunden, dass bei der entsprechenden Ventilstellung auch Hydraulikfluid aus den Radbremsen abgepumpt werden kann.

In JP 10-258724 wird ein hydraulisches Bremsgerät beschrieben. Dabei wird die Hydraulikpumpe in eine Aussparung der Ventilplatte des Hydraulikkreises montiert. Durch entsprechende Verbindungsöffnungen zwischen Hydraulikpumpe und Ventilplatte kann auf zusätzliche Leitungen zwischen den einzelnen Baugruppen verzichtet werden.

Der Erfindung liegt die Aufgabe zugrunde, ein leicht montierbares Druckerzeugersystem des Ein- oder Mehrkolbenpumpentyps anzugeben. Der Erfindung liegt ferner die Aufgabe zugrunde, ein Montageverfahren für das Druckerzeugersystem anzugeben.

### Kurzer Abriss der Erfindung

Gemäß einem ersten Aspekt der Erfindung wird diese Aufgabe gelöst durch ein Druckerzeugersystem für eine Fahrzeugbremsanlage, umfassend eine Mehrzahl eigenständig handhabbarer Pumpen-Unterbaugruppen mit unterschiedlichen Leistungsfähigkeiten und mit einem Zylinderblock mit wenigstens einem Einlass für ein Hydraulikfluid und wenigstens einem Auslass für das Hydraulikfluid, wobei in dem Zylinderblock ein, zwei oder mehr Zylinder ausgebildet sind, in denen jeweils ein Pumpkolben aufgenommen ist, und mit einer Betätigungseinheit für die Pumpkolben. Das Druckerzeugersystem umfasst des Weiteren ein Gehäuse zur wenigstens bereichsweisen Aufnahme einer ausgewählten der Pumpen-Unterbaugruppen, wobei der Zylinderblock der Pumpen-Unterbaugruppe im Gehäuse aufgenommen ist und die Pumpenunterbaugruppe mittels einer lösbaren Verbindung austauschbar in dem Gehäuse befestigt ist, und wobei das Gehäuse wenigstens einen ersten Fluidanschluss aufweist und den Einlass oder den Auslass des Zylinderblocks mit dem ersten Fluidanschluss verbindet.

Das Vorsehen einer eigenständig handhabbaren Pumpen-Unterbaugruppe ermöglicht eine Trennung der Aufgaben von Zylinderblock und Aufnahmegehäuse. Diese Trennung gestattet eine Optimierung sowohl des Zylinderblocks als auch des Aufnahmegehäuses hinsichtlich der jeweiligen Funktionalität. Zusätzlich wird durch eine eigenständig handhabbare Pumpen-Unterbaugruppe eine einfachere Montage und eine verbesserte Wartungsfähigkeit des Druckerzeugers erreicht.

Das Aufnahmegehäuse kann zusätzlich zu dem ersten Fluidanschluss wenigstens einen zweiten Fluidanschluss aufweisen, wobei das Gehäuse (bei in das Gehäuse eingefügter Pumpen-Unterbaugruppe) den ersten Fluidanschluss mit dem Einlass des Zylinderblocks und den zweiten Fluidanschluss mit dem Auslass der Pumpen-Unterbaugruppe verbindet. Zweckmäßigerweise ist der mit dem Einlass gekoppelte erste Fluidanschluss für eine Fluidquelle (z.B. für einen Fluidspeicher oder einen Hauptbremszylinder) vorgesehen. Der mit dem Auslass gekoppelte zweite Fluidanschluss kann mit wenigstens einem Hydraulikkreis (z.B. mit einem Bremskreis) gekoppelt werden. Gemäß dieser Anschlussvariante fungiert das Aufnahmegehäuse damit sowohl als Schnittstelle zwischen dem wenigstens einen Einlass des Zylinderblocks und der Fluidquelle als auch als Schnittstelle zwischen dem wenigstens einen Auslass und einem oder mehreren Hydraulikkreisen. Gemäß einer alternativen Variante erfüllt das Aufnahmegehäuse lediglich eine dieser beiden Schnittstellenfunktionen. So könnte entweder die Fluidquelle oder wenigstens einer der Hydraulikkreise auch unmittelbar mit dem Einlass oder dem Auslass des Zylinderblocks verbunden werden.

Der Zylinderblock kann in einem an das Aufnahmegehäuse angrenzenden Bereich wenigstens eine Zylinderöffnung aufweisen. Es wäre auch denkbar, dass jeder Zylinder eine derartige, an das Gehäuse angrenzende Zylinderöffnung besitzt. Die Zylinderöffnung kann durch ein Abschlusselement (beispielsweise durch einen Verschluss-Stopfen oder durch ein Fluidiksteuerelement wie ein Ventil) und/oder durch das Gehäuse begrenzt sein. Für jede Zylinderöffnung kann ein eigenes Abschlusselement vorgesehen werden. Es ist jedoch auch denkbar, für zwei, mehr oder alle Zylinderöffnungen ein gemeinsames (beispielsweise ein den Zylinderblock umschließendes) Abschlusselement vorzusehen.

Das Abschlusselement kann derart mit dem Zylinderblock gekoppelt sein, dass es im Betrieb des Druckerzeugers am Gehäuse abgestützt ist. Das Abschlusselement muss daher nicht mittels hohem Druck standhaltenden (Schraub- oder Stemm-) Verbindungen am oder im Zylinderblock befestigt sein. Vielmehr lässt sich eine auch bei Druckbeaufschlagung zuverlässige Kopplung des wenigstens einen Abschlusselements mit dem Zylinderblock dadurch erreichen, dass das wenigstens eine Abschlusselement im montierten Zustand der Pumpen-Unterbaugruppe am Gehäuse anliegt.

Bei Vorsehen einer Mehrzahl von Zylindern im Zylinderblock können die Zylinder relativ zueinander innerhalb des Zylinderblocks verschiedene, fest vorgegebene Ausrichtungen aufweisen. Gemäß einer ersten Variante sind die Zylinder im Zylinderblock sternförmig angeordnet. So können sich die Zylinder im Wesentlichen radial bezüglich einer Antriebsachse erstrecken. Gemäß einer anderen Variante verlaufen die Zylinder innerhalb des Zylinderblocks parallel zueinander.

Der Zylinderblock kann eine gerade oder eine ungerade Anzahl von Zylinder/Kolben-Anordnungen umfassen. So können 3, 4, 5, 6 oder mehr Zylinder mit darin aufgenommenen Pumpkolben vorgesehen sein. Die Anzahl der verwendeten Zylinder/Kolben-Anordnungen hängt auch von den jeweiligen Erfordernissen ab. So kann bei einer Fahrzeugbremsanlage mit zwei oder mehr Hydraulikkreisen pro Hydraulikkreis wenigstens eine Zylinder/Kolben-Anordnung angeschlossen sein. Zur Bereitstellung eines höheren Hydraulikdrucks können pro Hydraulikkreis zwei oder mehr Zylinder /Kolben-Anordnungen vorgesehen sein. Die Zylinder/Kolben-Anordnungen können von der Betätigungseinheit synchron oder asynchron betätigt werden. Zur Glättung von Pulsationsspitzen ist es zweckmäßig, wenigstens zwei asynchron betätigte Zylinder/Kolben-Anordnungen pro Hydraulikkreis vorzusehen.

Der Druckerzeuger kann zur Kopplung mit zwei oder mehr Hydraulikkreisen ausgebildet sein. In diesem Fall kann im Zylinderblock für jeden Hydraulikkreis wenigstens eine Zylinder/Kolben-Anordnung vorgesehen werden. Gemäß einer Variante sind im Zylinderblock wenigstens eine Zylinder/Kolben-Anordnung für einen Bremskraftverstärkerkreis und für zwei ABS-Kreise wenigstens je eine weitere Zylinder/Kolben-Anordnung ausgebildet. Zweckmäßigerweise werden sämtliche Zylinder/Kolben-Anordnungen von einer gemeinsamen Betätigungseinheit betätigt.

Die Pumpen-Unterbaugruppe kann auf verschiedene Weisen mit dem Aufnahmegehäuse gekoppelt sein. Es hat sich als zweckmäßig erwiesen, die Pumpen-Unterbaugruppe lösbar im Aufnahmegehäuse anzuordnen. In diesem Zusammenhang kann an eine Schraub- oder Klemmverbindung gedacht werden.

Die Aufteilung des Druckerzeugers in eine eigenständig handhabbare Pumpen-Unterbaugruppe einerseits und ein Aufnahmegehäuse hierfür andererseits gestattet es, diese beiden Komponenten gemäß ihren spezifischen Funktionalitäten zu optimieren. So kann das Aufnahmegehäuse aus einem anderen Material gefertigt sein als der Zylinderblock. Das Gehäuse besteht beispielsweise aus einem massiven ersten Material wie Aluminium, in dem auf einfache Weise Fluidleitungen ausgebildet und Fluidiksteuerelemente wie Ventile vorgesehen werden können ("Ventilblock"). Der Zylinderblock kann hingegen aus einem besonders verschleißfestem zweiten Material wie Stahl oder Grauguss bestehen.

Die Betätigungseinheit für die Pumpkolben kann verschiedene Komponenten umfassen. So kann die Betätigungseinheit beispielsweise einen Exzenter oder eine Schrägscheibe aufweisen, um eine asynchrone Betätigung der Pumpkolben zu gestatten. Ferner kann die Betätigungseinheit einen Elektromotor umfassen, der eine zyklische Betätigung der Pumpkolben ermöglicht. Für die Betätigungseinheit kann ein eigenes Gehäuse vorgesehen sein, das am Zylinderblock befestigt ist.

Gemäß einem zweiten Aspekt der Erfindung wird ein Verfahren zur Montage eines Druckerzeugersystems in eine Fahrzeugbremsanlage geschaffen. Das Verfahren umfasst die Schritte des Bereitstellens eines Gehäuses zur Aufnahme wenigstens eines Abschnittes einer Pumpen-Unterbaugruppe, wobei das Gehäuse wenigstens einen Fluidanschluss aufweist, und des Bereitstellens einer Mehrzahl eigenständig handhabbarer Pumpen-Unterbaugruppe mit unterschiedlichen Leistungsfähigkeiten und mit einem Zylinderblock mit wenigstens einem Einlass für ein Hydraulikfluid und wenigstens einem Auslass für das Hydraulikfluid, wobei in dem Zylinderblock ein, zwei oder mehr Zylinder ausgebildet sind, in denen jeweils ein Pumpkolben aufgenommen ist, und mit einer Betätigungseinheit für die Pumpkolben. Das Verfahren umfasst die weiteren Schritte des Anschließens des Gehäuses durch Verbinden des Fluidanschlusses mit einer Fluidquelle oder mit einem Hydraulikkreis und des Einfügens einer aus einer Mehrzahl der Pumpen-Unterbaugruppen ausgewählte Pumpen-Unterbaugruppe in das Gehäuse, wobei der Zylinderblock im Gehäuse aufgenommen wird, wobei der Einlass oder der Auslass des Zylinderblocks mit dem Fluidanschluss verbunden wird, und wobei die Pumpen-Unterbaugruppe mittels einer lösbaren Verbindung austauschbar in dem Gehäuse befestigt wird.

Falls das Gehäuse zwei oder mehr Fluidanschlüsse aufweist, kann beim Anschließen des Gehäuses wenigstens ein erster Fluidanschluss mit einer Fluidquelle und wenigstens ein zweiter Fluidanschluss mit wenigstens einem Hydraulikkreis verbunden werden. Das Einfügen der Pumpen-Unterbaugruppe in das Gehäuse kann in diesem Fall derart erfolgen, dass der Einlass des Zylinderblocks über einen entsprechenden Fluidanschluss des Gehäuses mit der Fluidquelle und der Auslass über einen anderen Fluidanschluss des Gehäuses mit wenigstens einem Hydraulikkreis verbunden wird.

Die modulare Unterteilung des Druckerzeugers in eine eigenständig handhabbare Pumpen-Unterbaugruppe einerseits und ein Aufnahmegehäuse für diese Pumpen-Unterbaugruppe andererseits ermöglicht es, dass das Aufnahmegehäuse in einem ersten Schritt wie oben erläutert angeschlossen wird und die Pumpen-Unterbaugruppe in einem zweiten Schritt in das bereits angeschlossene Gehäuse eingefügt wird. Es wäre jedoch auch denkbar, die Pumpen-Unterbaugruppe bereits vor dem Anschließen des Gehäuses in das Gehäuse einzufügen und den komplett montierten Druckerzeuger anschließend an die Fahrzeugbremsanlage anzuschließen.

Der modulare Ansatz weist sowohl herstellungsseitig als auch im Rahmen eines Fahrzeugservices sowie beim Austausch einer defekten Unterbaugruppe wesentliche Vorteile auf. So kann beispielsweise eine defekte Pumpen-Unterbaugruppe aus dem angeschlossenen Gehäuse ausgebaut und die reparierte oder eine neue Pumpen-Unterbaugruppe in das angeschlossene Gehäuse eingefügt werden. Das Aufnahmegehäuse muss während dieses Vorganges nicht von der Fahrzeugbremsanlage getrennt werden.

An dieser Stelle soll noch darauf hingewiesen werden, dass einige der erfindungsgemäßen Aspekte, insbesondere der Anschluss der Zylinder/Kolben-Anordnungen an eine Fahrzeugbremsanlage sowie die Verteilung der einzelnen Zylinder/Kolben-Anordnungen auf die einzelnen Hydraulikkreise einer Fahrzeugbremsanlage, auch unabhängig von dem modularen Konzept implementiert werden können. Es wäre daher beispielsweise möglich, den Zylinderblock und das Gehäuse einstückig (etwa in Gestalt eines massiven Metallblockes) auszubilden.

### Kurze Beschreibung der Zeichnungen

Weitere Einzelheiten und Vorteile der Erfindung ergeben sich aus der nachfolgenden Beschreibung bevorzugter Ausführungsbeispiele sowie aus den Figuren. Es zeigt:
- Fig. 1: ein erstes Ausführungsbeispiel eines erfindungsgemäßen Druckerzeugers in einer perspektivischen Ansicht;
- Fig. 2: den Druckerzeuger gemäß Fig. 1 in einer teilweisen Explosionsdarstellung;
- Fig. 3: den Druckerzeuger gemäß Fig. 1 in einer teilweisen Schnittdarstellung;
- Fig. 4: einen Zylinderblock des Druckerzeugers gemäß Fig. 1 im Längsschnitt;
- Fig. 5: eine perspektivische Ansicht der einem Aufnahmegehäuse zugewandten Seite des Zylinderblocks gemäß Fig. 4;
- Fig. 6: eine perspektivische Ansicht einer dem Aufnahmegehäuse abgewandten Seite des Zylinderblocks gemäß Fig. 4;
- Fig. 7: eine perspektivische Ansicht einer eigenständig handhabbaren Pumpen- Unterbaugruppe gemäß einem weiteren Ausführungsbeispiel der Erfindung;
- Fig. 8: eine Vorderansicht der Pumpen-Unterbaugruppe gemäß Fig. 7;
- Fig. 9: eine Rückansicht der Pumpen-Unterbaugruppe gemäß Fig. 7;
- Fig.10: einen Längsschnitt der Pumpen-Unterbaugruppe gemäß Fig. 7;
- Fig.11: einen Querschnitt der Pumpen-Unterbaugruppe gemäß Fig. 7 im Bereich eines Zylinderblocks;
- Fig.12: einen vergrößerten Ausschnitt aus Fig. 11;
- Fig.13: eine perspektivische Ansicht eines Druckerzeugers gemäß einem weiteren Ausführungsbeispiel der Erfindung;
- Fig.14: einen Längsschnitt des Druckerzeugers gemäß Fig. 13;
- Fig.15: einen vergrößerten Bereich eines weiteren Längsschnittes des Druckerzeugers gemäß Fig. 13;
- Fig.16 bis 19: verschiedene Querschnittsansichten des Druckerzeugers gemäß Fig. 13;
- Fig. 20: eine mehrkreisige Fahrzeugbremsanlage mit einer schematischen Darstellung der einzelnen Zylinder/Kolben-Anordnungen eines erfindungsgemäßen Druck- erzeugers gemäß einem weiteren Ausführungsbeispiel der Erfindung; und
- Fig. 21: eine schematische Darstellung des Zylinderblocks des Druckerzeugers gemäß Fig. 20.

### Beschreibung bevorzugter Ausführungsbeispiele

Im Folgenden werden verschiedene Mehrkolbenpumpen-Druckerzeuger für den Einsatz in hydraulischen oder elektrohydraulischen Fahrzeugbremsanlagen beschrieben. Die vorgestellten Druckerzeuger liefern den zur Ansteuerung einer oder mehrerer Radbremsen benötigten hydraulischen Druck und können beispielsweise Bestandteil eines hydraulischen Bremskraftverstärkungssystems oder einer ABS-, ASR-, ACC- oder VSC- (Vehicle Stability Control, auch als ESP bezeichnet) Regeleinrichtung sein.

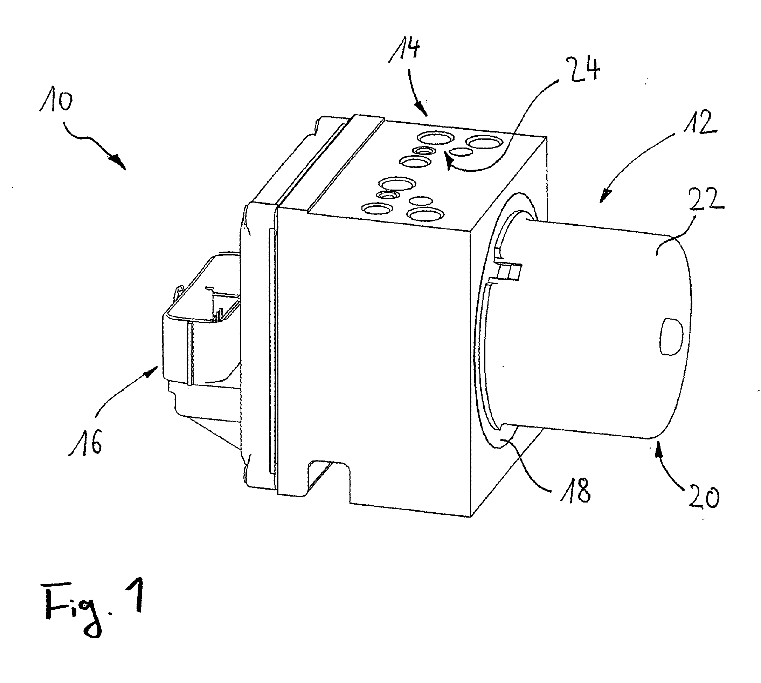

Fig. 1 zeigt eine perspektivische Ansicht eines ersten Ausführungsbeispiels eines erfindungsgemäßen Druckerzeugers 10 für eine Fahrzeugbremsanlage in fertig montiertem Zustand. Der Druckerzeuger 10 eignet sich beispielsweise zur Implementierung einer VSC-Regeleinrichtung.

Der Druckerzeuger 10 gemäß Fig. 1 umfasst eine eigenständig handhabbare Pumpen-Unterbaugruppe 12, die bereichsweise in einem Aufnahmegehäuse 14 in Gestalt eines massiven Aluminiumblocks mit darin ausgebildeten Fluidleitungen und darin angeordneten Fluidiksteuerelementen aufgenommen ist. Als dritte übergeordnete Komponente umfasst der Druckerzeuger 10 eine an das Gehäuse 14 angeschraubte Einheit 16 für die Kontaktierung der elektrischen Komponenten des Druckerzeugers 10.

Die in das Gehäuse 14 abschnittsweise eingefügte Pumpen-Unterbaugruppe 12 umfasst einen in Fig. 1 nur teilweise sichtbaren, kreisringförmigen Zylinderblock 18 aus einem verschleißfestem Material wie Stahl oder Grauguss sowie eine am Zylinderblock 18 befestigte Betätigungseinheit 20. Die Betätigungseinheit 20 ist in einem topfförmigen Gehäuse 22 aufgenommen.

Das Aufnahmegehäuse 14 für die Pumpen-Unterbaugruppe 12 besitzt an seiner Oberseite eine Mehrzahl von Fluidanschlüssen 24. Im fertig montierten Zustand des Druckerzeugers 10 wird der Druckerzeuger 10 mittels der Fluidanschlüsse 24 an eine Fluidquelle sowie an einen oder mehrere Hydraulikkreise angeschlossen.

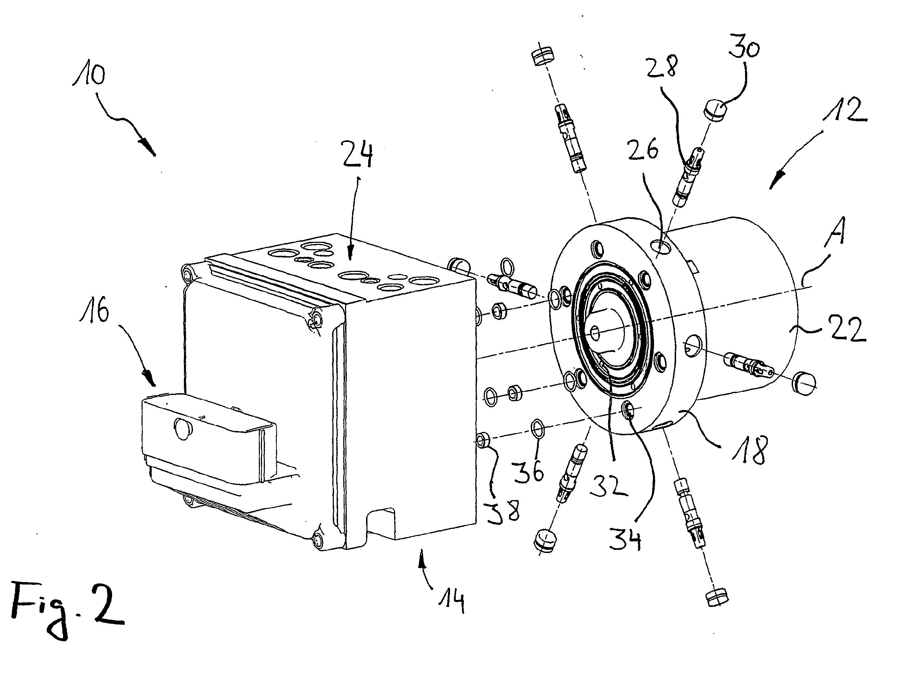

Fig. 2 zeigt eine weitere perspektivische Ansicht des Druckerzeugers 10, wobei die Pumpen-Unterbaugruppe 12 in einer teilweisen Explosionsansicht dargestellt ist. Deutlich zu erkennen ist der ringförmige Aufbau des Zylinderblocks 18. Im Zylinderblock 18 sind insgesamt 6 Zylinder ausgebildet. Von diesen 6 Zylindern sind in der Ansicht gemäß Fig. 2 lediglich einige am Außenumfang des Zylinderblocks 18 ausgebildete Zylinderöffnungen 26 zu sehen. Im montierten Zustand der Pumpen-Unterbaugruppe 12 grenzen die Zylinderöffnungen 26 an einen Außenumfang einer für die Aufnahme des Zylinderblocks 18 im Gehäuse 14 vorgesehenen topfförmigen Aussparung. Die insgesamt 6 Zylinder sind sternförmig im Zylinderblock 18 ausgebildet. Mit anderen Worten, die Zylinder erstrecken sich in radiale Richtungen bezüglich einer Längsachse A der Pumpen-Unterbaugruppe 12. Aus diesem Grund wird der Druckerzeuger 10 auch als Radial-Mehrkolbenpumpe bezeichnet.

In den im Zylinderblock 18 ausgebildeten Zylindern ist jeweils ein Pumpkolben 28 beweglich aufgenommen. Bei der Montage der Pumpen-Unterbaugruppe 12 wird nach dem Einführen eines der Pumpkolbens 28 in den dafür jeweils vorgesehenen Zylinder (durch die entsprechende Zylinderöffnung 26 hindurch) der Zylinder mittels eines Abschlusselements 30 verschlossen. Im Ausführungsbeispiel gemäß Fig. 2 ist das Abschlusselement 30 als Verschluss-Stopfen ausgebildet. Da sich der Verschluss-Stopfen im Betrieb des fertig montierten Druckerzeugers am Gehäuse 14 abstützen kann, ist keine besonders aufwendige Verankerung des Verschluss-Stopfens in dem zugehörigen Zylinder erforderlich. Insbesondere kann auf herkömmliche Verankerungstechniken wie eine Verstemmung oder eine Gewindeverbindung verzichtet werden.

Auf seiner dem Aufnahmegehäuse 14 zugewandten Stirnseite weist der Zylinderblock 18 pro Zylinder/Kolben-Anordnung je einen Fluideinlass 32 sowie je einen Fluidauslass 34 auf. Jeder der Fluidauslässe 34 mündet im Zylinderblock 18 in eine zylinderische Vertiefung, in die je ein Dichtungsring 36 und je ein Anschlusszylinder 38 eingesetzt werden.

Beim Einfügen der Pumpen-Unterbaugruppe 12 in das Aufnahmegehäuse 14 werden die am Zylinderblock 18 ausgebildeten Fluideinlässe 32 und Fluidauslässe 34 (über im Gehäuse 14 angeordneter Fluidleitungen und Fluidsteuerelemente) mit den Fluidanschlüssen 24 des Gehäuses 14 verbunden. Genauer gesagt erfolgt eine Verbindung der Fluideinlässe 32 des Zylinderblocks 18 mit einem Anschluss 24 für eine Fluidquelle sowie eine Verbindung der Fluidauslässe 34 des Zylinderblocks 18 mit einem Anschluss 24 für einen oder mehrere Hydraulikkreise.

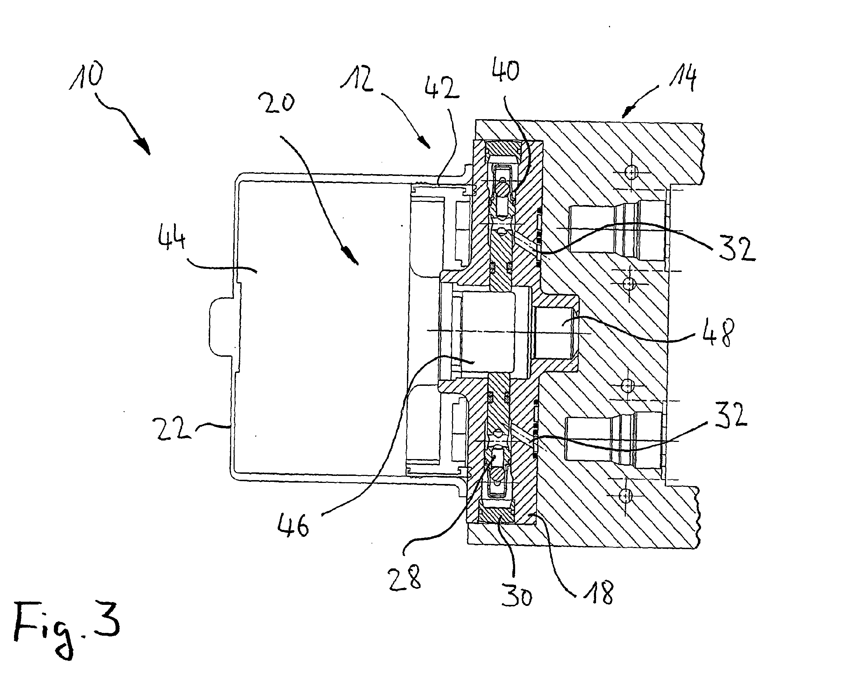

Fig. 3 zeigt einen teilweisen Längsschnitt des Druckerzeugers 10 gemäß Fig. 1. Deutlich zu erkennen ist der Sachverhalt, dass die Pumpen-Unterbaugruppe 12, genauer gesagt der Zylinderblock 18, in einer topfförmigen Aussparung 40 des Aufnahmegehäuses 14 eingefügt ist. Das Einfügen des Zylinderblocks 14 in die hierfür vorgesehene Aussparung 40 erfolgt derart, dass zwischen dem Zylinderblock 18 und dem Aufnahmegehäuse 14 ein lösbarer Presssitz ausgebildet wird. Das lösbare Ausbilden des Presssitzes ermöglicht einen späteren Austausch der Pumpen-Unterbaugruppe 12, ohne dass das Aufnahmegehäuse 14 von der Fahrzeugbremsanlage getrennt werden müsste.

Gut zu erkennen ist in Fig. 3 der Aufbau der Betätigungseinheit 20. Die Betätigungseinheit 20 umfasst das bereits erwähnte topfförmige Gehäuse 22, welches mittels Klammern 42 lösbar am Zylinderblock 18 befestigt ist. Die Betätigungseinheit 20 umfasst ferner einen im Gehäuse 22 angeordneten Elektromotor 44 mit einem auf eine Motorwelle 48 aufgeklemmten Exzenter 46. In der Schnittdarstellung gemäß Fig. 3 ist die Exzentrizität des Exzenters 46 nicht zu erkennen.

Der Exzenter 46 wirkt unmittelbar mit den den Abschlusselementen 30 gegenüberliegenden Stirnseiten der Pumpkolben 28 zusammen. Dieses Zusammenwirken erfolgt aufgrund der Exzentrizität des Exzenters 46 in asynchroner Weise. Dies bedeutet, dass wenigstens einige der insgesamt 6 Pumpkolben 28 sich zu jedem Zeitpunkt während des Pumpbetriebs in unterschiedlichen Betriebsstellungen bezüglich des Ansaugens und Ausstoßens von Hydraulikfluid befinden. Indem zwei oder mehr der asynchron betätigten Pumpkolben an einen einzigen Hydraulikkreis angeschlossen werden, lassen sich unerwünschte Druckpulsationen glätten.

Ein weiterer Sachverhalt, der Fig. 3 entnommen werden kann, ist die Tatsache, dass die Abschlusselemente 30 sich im Betrieb des Druckerzeugers 10 an einer umlaufenden Innenwand der Gehäuseaussparung 40 abstützen können. Dies ermöglicht den bereits erwähnten Verzicht auf aufwendige Verbindungstechniken zwischen den Abschlusselementen 30 und dem Zylinderblock 18.

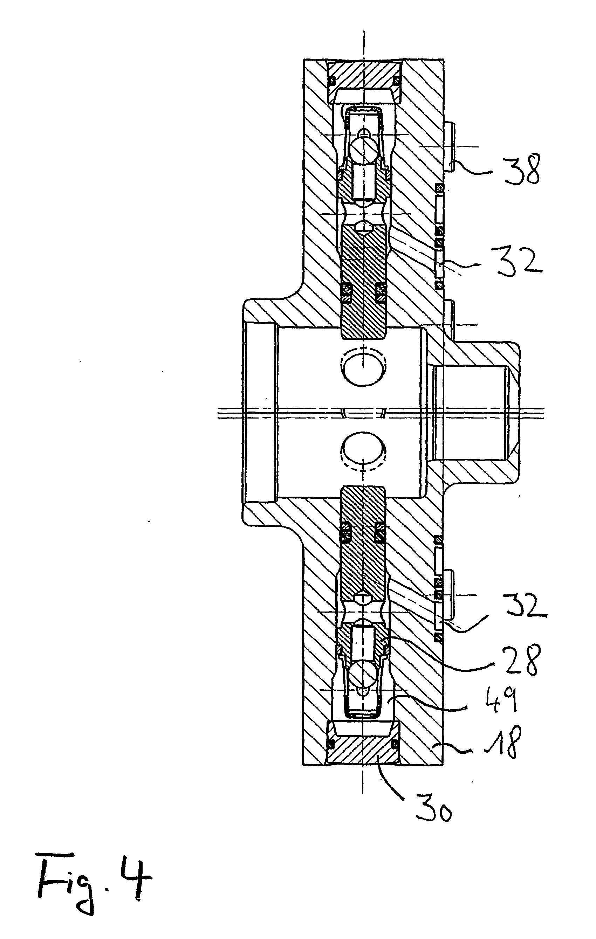

Fig. 4 zeigt einen Längsschnitt durch den Zylinderblock 18 mit den in sternförmig angeordneten Zylindern 49 aufgenommenen Pumpkolben 28. Deutlich zu erkennen sind die Fluideinlässe 32 und Fluidauslässe 38 des Zylinderblocks 18. Ebenfalls zu erkennen ist, dass die Abschlusselemente 30 lediglich mittels eines Presssitzes (und nicht mittels der bereits erwähnten aufwendigeren Befestigungstechniken) im Zylinderblock 18 befestigt sind.

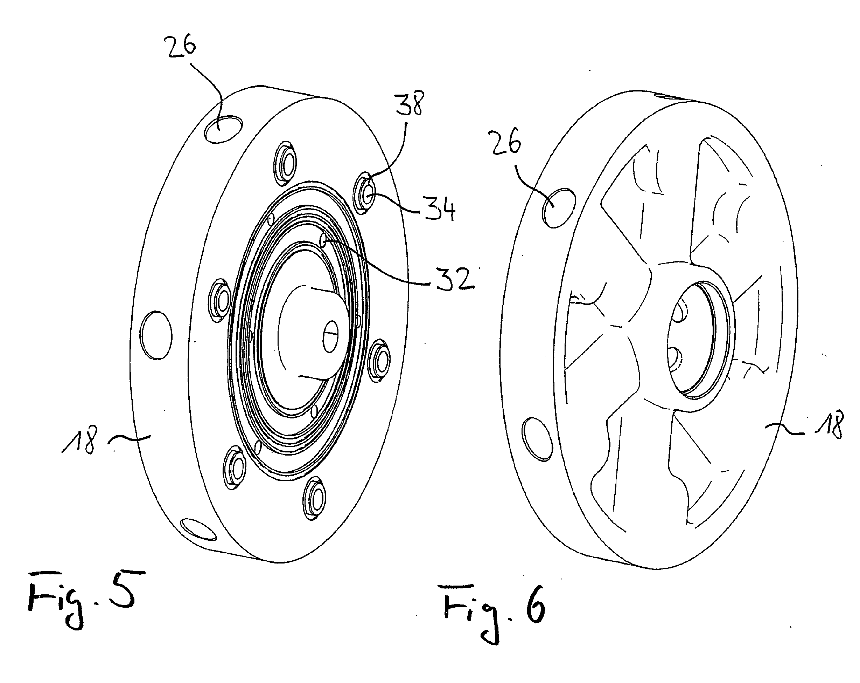

Die Fign. 5 und 6 zeigen den Zylinderblock 18 nochmals vor der Montage der Pumpkolben 28 und der Abschlusselemente 30. Fig. 5 ist eine Darstellung der dem Aufnahmegehäuse 14 zugewandten Stirnseite des Zylinderblocks 18 mit den Fluideinlässen 32 und Fluidauslässen 34. Fig. 6 zeigt die der Betätigungseinheit zugewandte Rückseite des Zylinderblocks 18 mit den sternförmig angeordneten Zylinderwänden.

Zur Montage des Druckerzeugers 10 gemäß dem ersten Ausführungsbeispiel in eine Fahrzeugbremsanlage wird die Pumpen-Unterbaugruppe 12 in das Gehäuse 14 eingefügt, wodurch die Einlässe 32 und Auslässe 34 des Zylinderblocks 18 mit den entsprechenden Fluidanschlüssen 24 des Gehäuses 14 verbunden werden. Bei einer zweikreisigen Fahrzeugbremsanlage wäre es denkbar, 3 der insgesamt 6 Zylinder/Kolben-Anordnungen mit einem ersten Hydraulikkreis und die verbleibenden drei Zylinder/Kolben-Anordnung mit einem zweiten Hydraulikkreis zu koppeln. Bei einem Zylinderblock mit 4 oder 8 Zylinder/Kolben-Anordnungen ließe sich auch eine radselektive Ansteuerung implementieren.

Das Einfügen der Pumpen-Unterbaugruppe 12 in das Gehäuse 14 kann vor oder nach dem Anschließen des Gehäuses 14 an die Fahrzeugbremsanlage erfolgen. Der modulare Aufbau des Druckerzeugers 10 ermöglicht daher einen Austausch der Pumpen-Unterbaugruppe 12, ohne dass das Gehäuse 14 von der Fahrzeugbremsanlage getrennt werden müsste. Auch wäre es denkbar, für verschiedene Kraftfahrzeugtypen einen einzigen Gehäusetyp 14 vorzusehen, der je nach Anforderungen an die Leistungsfähigkeit mit unterschiedlichen Typen von Unterbaugruppen 12 kombiniert wird.

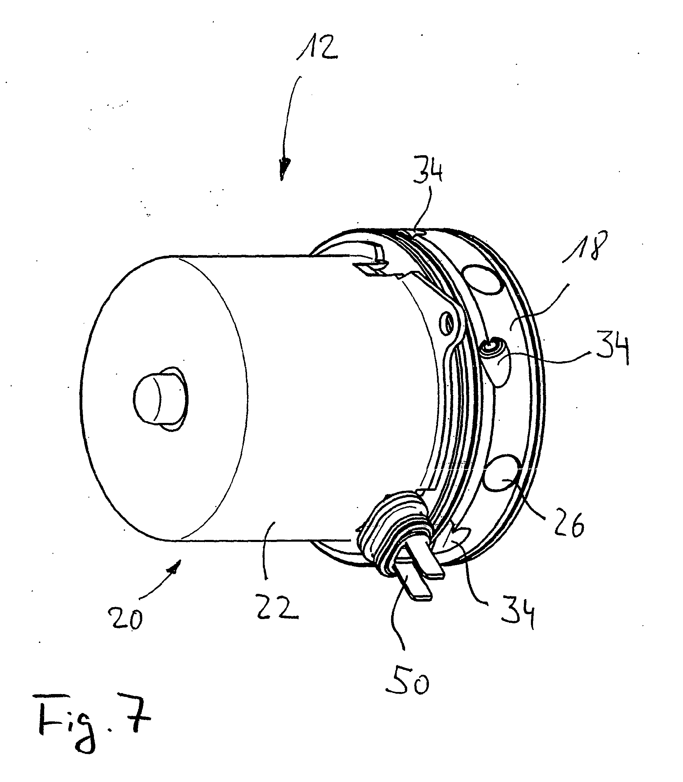

Die Fign. 7 bis 12 zeigen eine Pumpen-Unterbaugruppe 12 gemäß einem zweiten Ausführungsbeispiel. Übereinstimmende Elemente wurden mit denselben Bezugszeichen versehen wie bei der Pumpen-Unterbaugruppe des ersten Ausführungsbeispiels. Da zwischen den Pumpen-Baugruppen des ersten und zweiten Ausführungsbeispiels große Ähnlichkeiten bestehen, beschränkt sich nachfolgende Beschreibung des zweiten Ausführungsbeispiels auf eine Erörterung der wesentlichen Unterschiede.

Wie sich aus der perspektivischen Ansicht der Pumpen-Unterbaugruppe 12 des zweiten Ausführungsbeispiels gemäß Fig. 7 ergibt, weist die Betätigungseinheit 20 einen aus dem Gehäuse 22 der Betätigungseinheit 20 herausgeführten elektrischen Anschluss 50 auf. Der elektrische Anschluss 50 dient dazu, einen im Gehäuse 22 der Betätigungseinheit 20 angeordneten Elektromotor (nicht dargestellt in Fig. 7) mit elektrischer Leistung zu versorgen.

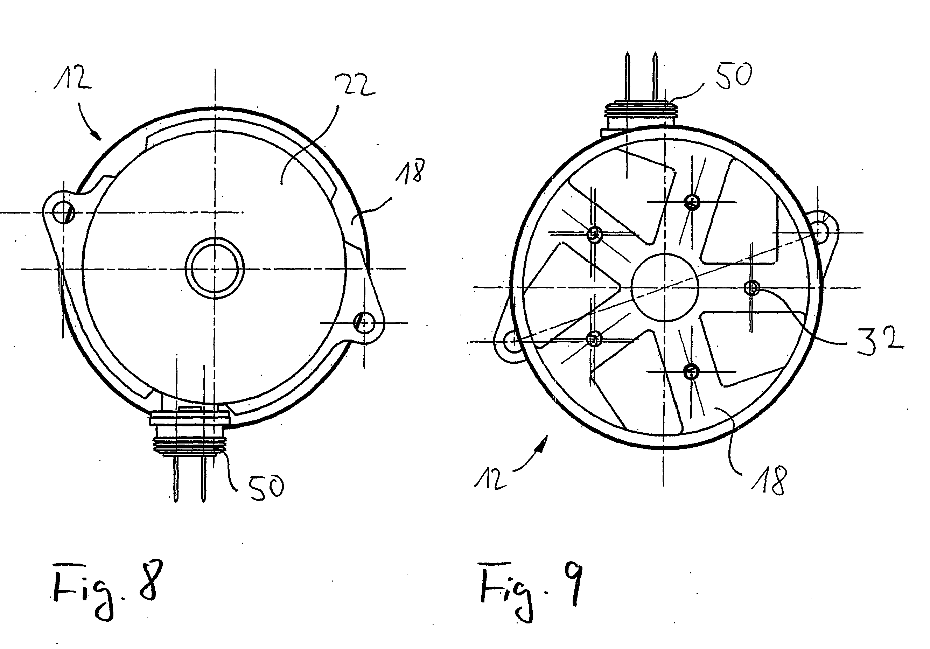

Im Gegensatz zum ersten Ausführungsbeispiel sind bei der Pumpen-Unterbaugruppe 12 des zweiten Ausführungsbeispiels die Fluidauslässe 34 am Außenumfang des ringförmigen Zylinderblocks 18 und benachbart zu den zugehörigen Zylinderöffnungen 26 angeordnet. Die Fluideinlässe 32 des Zylinderblocks 18 sind auf der einem nicht dargestellten Aufnahmegehäuse für die Pumpen-Unterbaugruppe 12 zugewandten Stirnseite des Zylinderblocks 18 ausgebildet. Dieser Sachverhalt kann der Vorderansicht der Unterbaugruppe gemäß Fig. 9 entnommen werden, während Fig. 8 eine Rückansicht zeigt. In Fig. 9 ist ferner erkennbar, dass im zweiten Ausführungsbeispiel lediglich 5 Zylinder vorgesehen sind. Dieser Sachverhalt ergibt sich aus den insgesamt 5 Armen der in Fig. 9 dargestellten sternförmigen Zylinderstruktur.

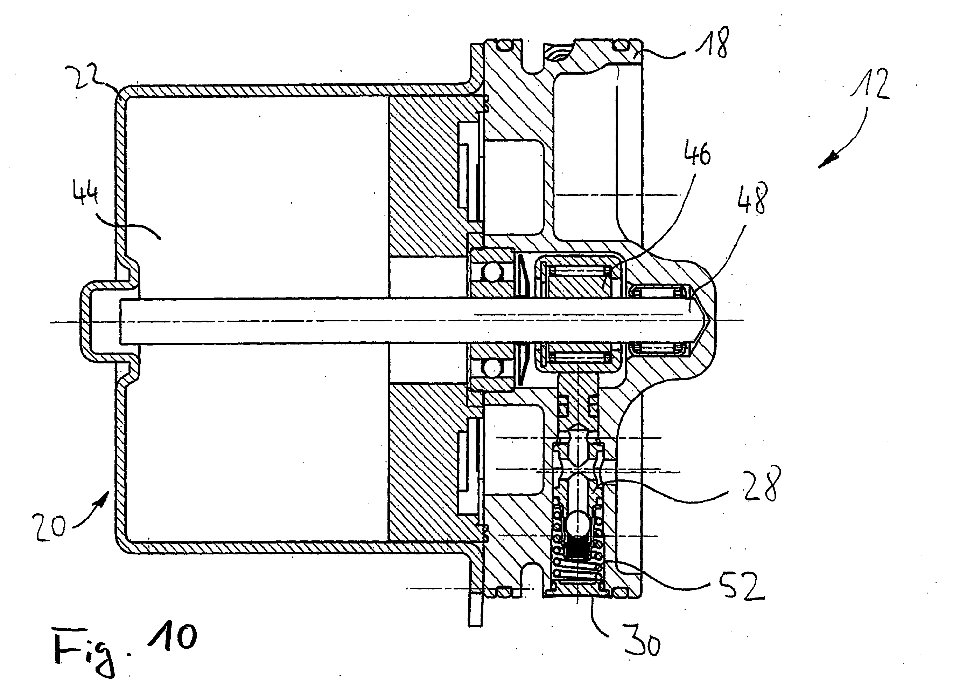

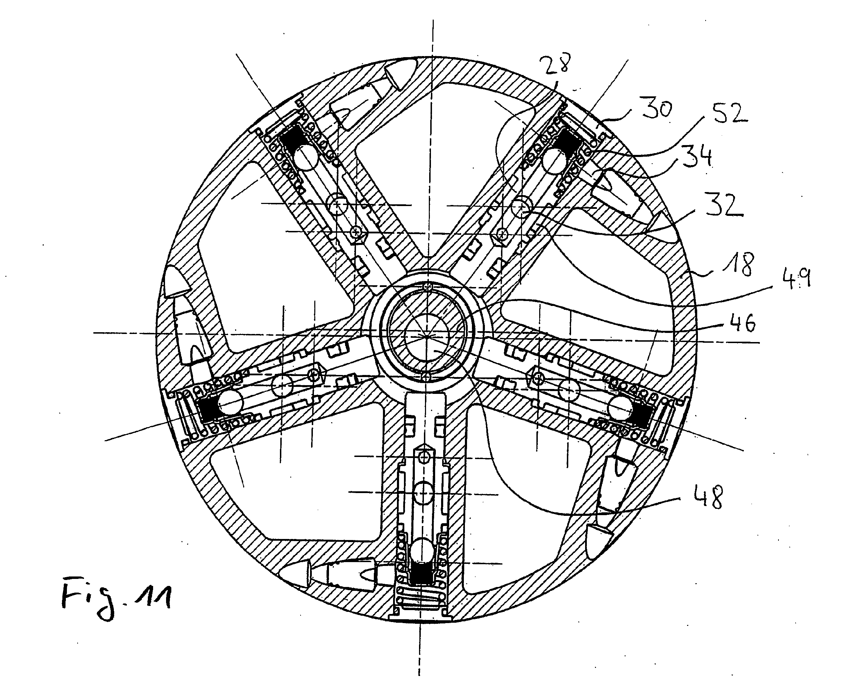

Fig. 10 zeigt einen Längsschnitt durch die Pumpen-Unterbaugruppe 12 gemäß dem zweiten Ausführungsbeispiel. Sowohl Fig. 10 als auch dem Schnitt durch den Zylinderblock 18 in Längsrichtung gemäß Fig. 11 ist die Exzentrizität des auf der Motorwelle 48 aufgesetzten Exzenter 46 zu entnehmen. Ferner zeigen beide Figuren, dass in jedem Zylinder 49 des Zylinderblocks 18 des zweiten Ausführungsbeispiels zusätzlich zu einem Pumpkolben 28 und einem Abschlusselement 30 ein elastisches Element 52 in Gestalt einer Spiralfeder angeordnet ist. Jede Spiralfeder 52 spannt den zugehörigen Pumpkolben 28 in Richtung auf den Exzenter 46 vor und gewährleistet daher, dass sich der Pumpkolben 28 in jeder Betriebsstellung in Anlage mit dem Exzenter 48 befindet.

Es wurde bereits erwähnt, dass die Fluideinlässe 32 und Fluidauslässe 34 des Zylinderblocks 18 eine andere Konfiguration als im ersten Ausführungsbeispiel aufweisen.

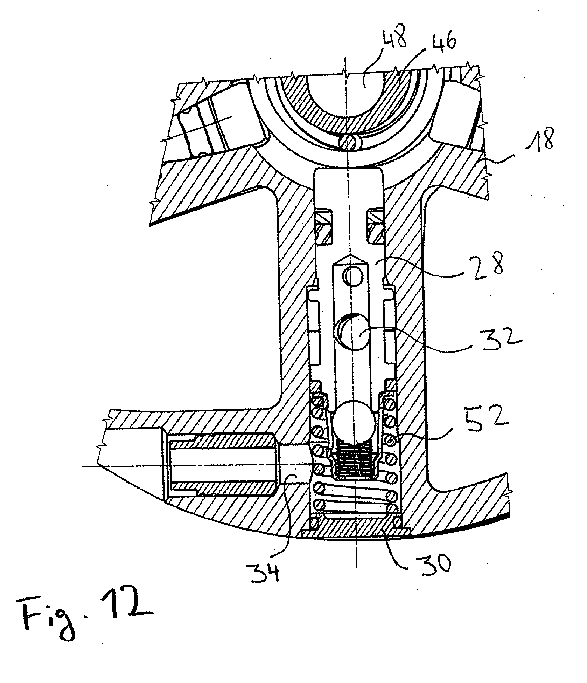

Wie Fig. 11 zu entnehmen ist, erstrecken sich die Fluidauslässe 34 im Wesentlichen in tangentialer Richtung innerhalb des kreisringförmigen Zylinderblocks 18, während die Fluideinlässe 32 in axialer Richtung verlaufen. Dieser Sachverhalt ist besonders deutlich in der Ausschnittsvergrößerung gemäß Fig. 12 dargestellt.

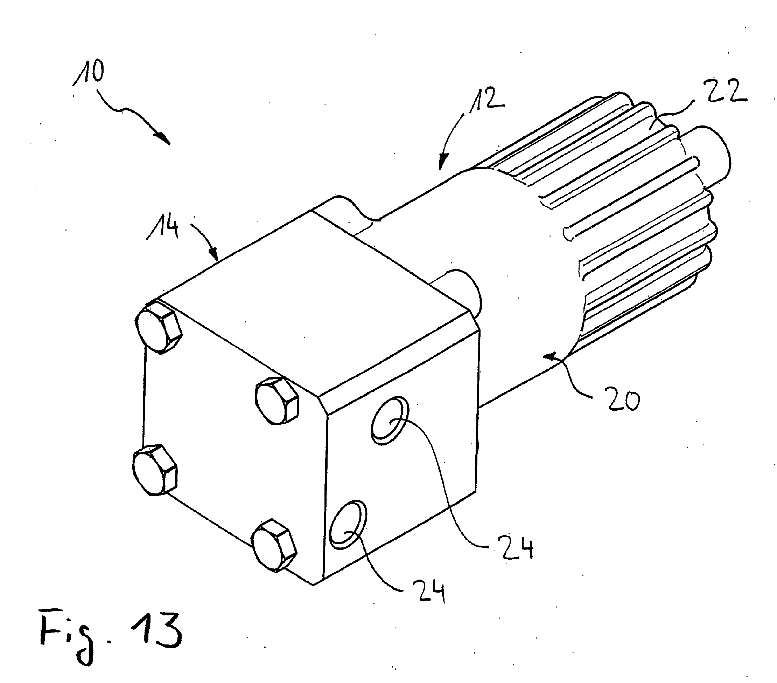

Ein drittes Ausführungsbeispiel der Erfindung ist in den Fign. 13 bis 19 gezeigt. Während die Druckerzeuger der ersten beiden Ausführungsbeispiele aufgrund der radialen Anordnung der Zylinder innerhalb des Zylinderblocks auch als Radial-Mehrkolbenpumpen bezeichnet werden, bezieht sich das dritte Ausführungsbeispiel auf eine sogenannte Axial-Mehrkolbenpumpe. Wie diese Bezeichnung bereits vermuten lässt, erstrecken sich die Zylinder/Kolben-Anordnungen bei dem Druckerzeuger des dritten Ausführungsbeispiels in axialer Richtung bezüglich einer Längsachse des Druckerzeugers. Elemente mit übereinstimmender Funktionalität werden im dritten Ausführungsbeispiel mit denselben Bezugszeichen wie in den beiden vorhergehenden Ausführungsbeispielen gekennzeichnet.

Fig. 13 zeigt eine perspektivische Ansicht des Druckerzeugers 10 gemäß dem dritten Ausführungsbeispiel. Der Druckerzeuger 10 umfasst ein Aufnahmegehäuse 14, in dem bereichsweise eine Pumpen-Unterbaugruppe 12 mit einem Zylinderblock (nicht sichtbar) und mit einer Betätigungseinheit 20 aufgenommen ist. Die Betätigungseinheit 20 ist in einem Gehäuse 22 angeordnet. Der Druckerzeuger 10 gemäß dem dritten Ausführungsbeispiel kann beispielsweise als hydraulischer Bremskraftverstärker verwendet werden und umfasst je einen Fluidanschluss 24 für eine Fluidquelle und einen Hydraulikkreis.

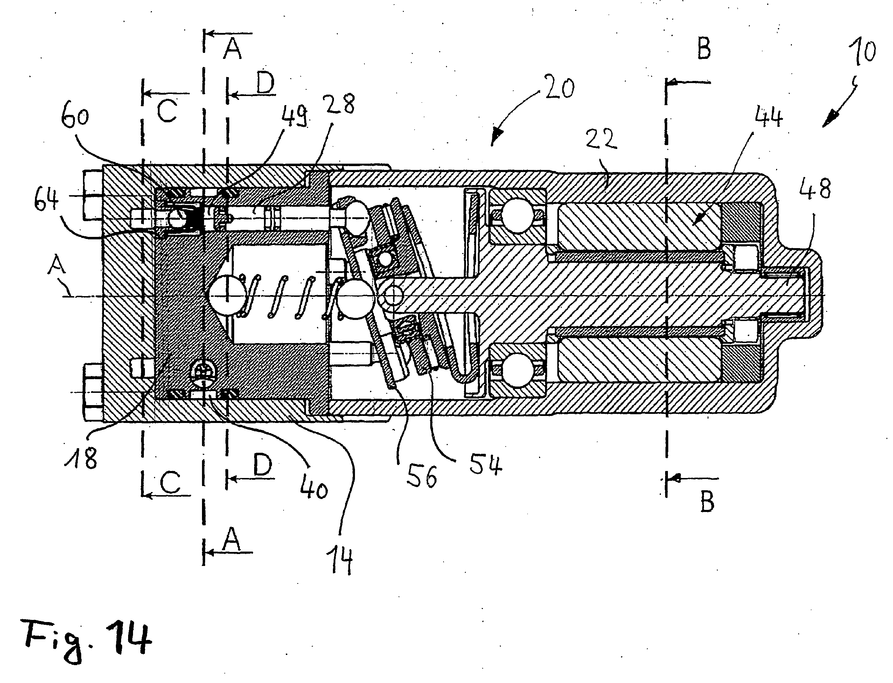

Wie dem Längsschnitt gemäß Fig. 14 zu entnehmen ist, weicht die Pumpen-Unterbaugruppe 12 des Druckerzeugers 10 gemäß dem dritten Ausführungsbeispiel sowohl hinsichtlich des Aufbaus des Zylinderblocks 18 als auch bezüglich der Konfiguration der Betätigungseinheit 20 von den ersten beiden Ausführungsbeispielen ab. Was die Betätigungseinheit 20 anbelangt, ist wiederum ein Elektromotor 44 mit einer Motorwelle 48 vorgesehen. Die Motorwelle 48 treibt im dritten Ausführungsbeispiel jedoch keinen Exzenter, sondern eine Schrägscheibe 54 an. Die Schrägscheibe 54 ist mit einer Antriebsscheibe 56 gekoppelt, in welcher kugelförmige Endabschnitte 58 von Pumpkolben 28 beweglich gelagert sind. Im Gegensatz zum ersten Ausführungsbeispiel erstrecken sich die Zylinder 49 sowie die Pumpkolben 28 in axialer Richtung bezüglich einer Längsachse A des Druckerzeugers 10.

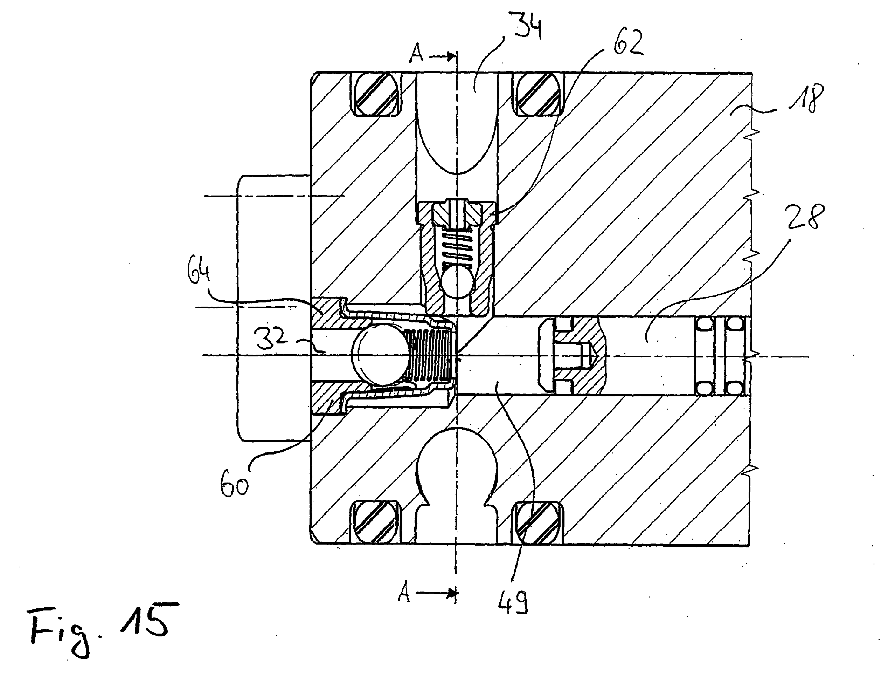

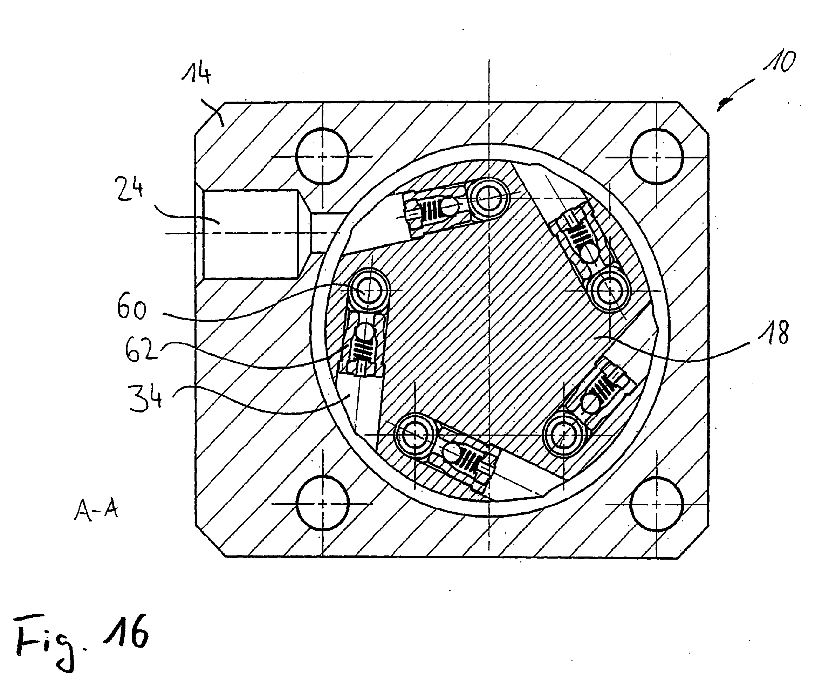

Im Betrieb des Elektromotors 44 wird eine Drehbewegung der Motorwelle 48 auf die Schrägscheibe 48 übertragen, welche daraufhin eine Taumelbewegung durchführt, die sich auf die Antriebsscheibe 56 derart überträgt, dass die mit der Antriebsscheibe 56 gekoppelten Pumpkolben 28 zur Förderung eines Hydraulikfluids in axialer Richtung hin und her bewegt werden. Dabei wird Hydraulikfluid durch die in Fig. 15 dargestellten Einlässe 32 des Zylinderblocks 18 angesaugt und über die Auslässe 34 unter Druck abgegeben. Während die Fluidzufuhr durch die Einlässe 32 in axialer Richtung erfolgt, wird das Fluid durch die Auslässe 34 in tangentialer Richtung ausgestoßen. Dieser Sachverhalt ist auch in Fig. 16 dargestellt, welche einen Schnitt entlang der Linie A-A von Fig. 15 zeigt. In der Schnittansicht gemäß Fig. 16 ist zusätzlich das Aufnahmegehäuse 14 mit einem Fluidanschluss 24 für einen Hydraulikkreis dargestellt.

Sowohl in den Fluideinlässen 32 als auch in den Fluidauslässen 34 ist gemäß Fig. 15 jeweils ein Ventil 60, 62 angeordnet. Das in jedem Auslass 34 vorgesehene Ventil 62 verhindert das Ansaugen von Hydraulikfluid durch die Auslässe 34 und das in jedem Einlass 32 vorgesehene Ventil 60 verhindert das Ausstoßen angesaugten Hydraulikfluids durch die Einlässe 32. Das Ventilelement 60 schließt den Zylinder 49 (oder besser gesagt dessen Zylinderöffnung) stirnseitig ab und fungiert daher als Abschlusselement. Wie insbesondere in Fig. 14 dargestellt ist, liegt das Ventil 60 mit seinem Ventilfuß 64 am Grund einer topfförmigen Aussparung 40 des Gehäuses 14 an. Aus diesem Grund kann sich das Ventil 60 im Betrieb des Druckerzeugers 10 am Gehäuse 14 abstützen. Auf aufwendige Verbindungstechniken (z.B. Verschrauben oder Verstemmen am Zylinderblock 18) für den Ventilfuß 64 kann daher verzichtet werden.

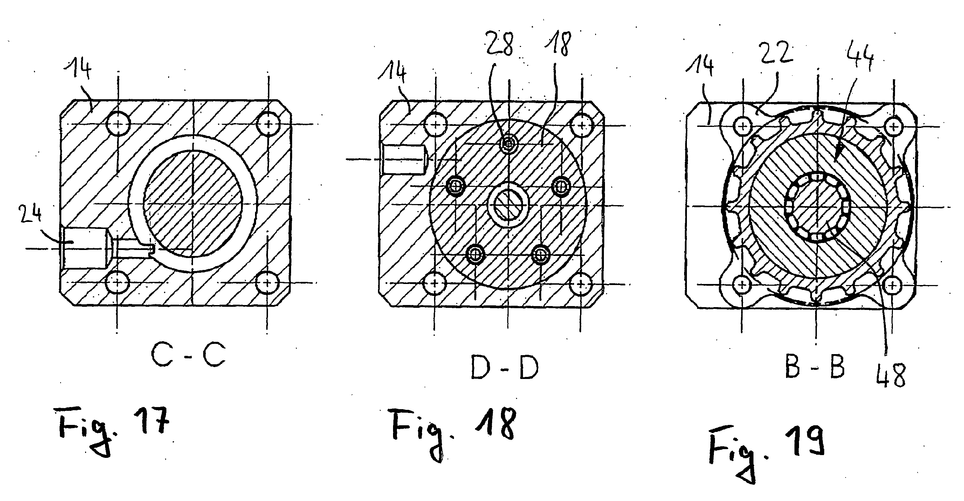

In den Fign. 17 bis 19 sind weitere Schnittansichten senkrecht zur Längsachse A in Fig. 14 dargestellt. So zeigt Fig. 17 einen Schnitt entlang der Linie C-C, Fig. 18 einen Schnitt entlang der Linie D-D und Fig. 19 einen Schnitt entlang der Linie B-B.

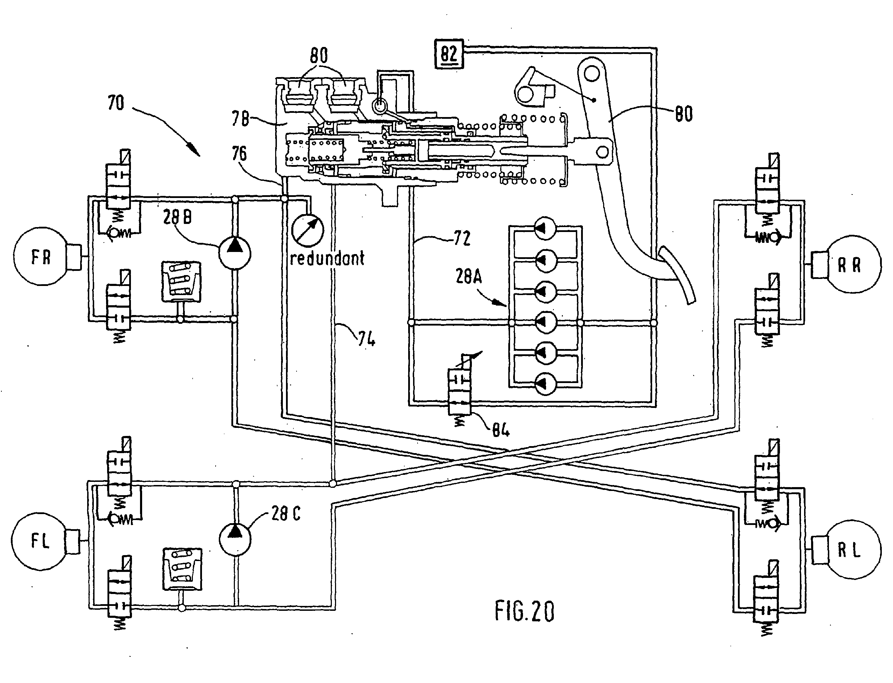

Fig. 20 zeigt eine erfindungsgemäße Fahrzeugbremsanlage 70, in der ein erfindungsgemäßer Druckerzeuger des Mehrkolben-Typs vorgesehen ist. Von dem Druckerzeuger sind in Fig. 20 lediglich die insgesamt acht Zylinder/Kolben-Anordnungen 28A, 28B und 28C dargestellt.

Die Fahrzeugbremsanlage 70 umfasst insgesamt drei Hydraulikkreise, nämlich einen Bremskraftverstärkerkreis 72 und zwei Hydraulikkreise 74, 76 zu jeweils zwei Radbremsen FR, RR, FL und LR. Jeder dieser drei Hydraulikkreise 72, 74, 76 ist auf bekannte Weise mit einem Hauptbremszylinder 78 gekoppelt. Der Hauptbremszylinder 78 ist mittels eines Bremspedals 80 betätigbar und besitzt Anschlüsse 80 für eine in Fig. 20 nicht dargestellte Fluidquelle. Der Bremskraftverstärkerkreis 72 ist eingangsseitig ebenfalls mit einer Fluidquelle 82 gekoppelt.

Wie Fig. 20 entnommen werden kann, ist im Bremskraftverstärkerkreis 82 eine Mehrzahl von insgesamt sechs Zylinder/Kolben-Anordnungen 28A vorgesehen, damit der erforderliche hohe Hydraulikdruck zur Bremskraftverstärkung erzeugt werden kann. In einem parallel zu den Zylinder/Kolben-Anordnungen ausgebildeten Zweig des Bremskraftverstärkerkreises 72 ist ein Ventil 84 vorgesehen. Das Ventil 84 kann im Aufnahmegehäuse für die Pumpen-Unterbaugruppe des in Fig. 20 nur schematisch dargestellten Druckerzeugers eingebaut sein.

Für die Hydraulikkreise 74, 76 ist eine ABS-Funktionalität implementiert, und die Zylinder/Kolben-Anordnungen 28B, 28C fungieren jeweils als ABS-Rückförderpumpe für den jeweiligen Bremskreis 74, 76. Da die entsprechenden Einzelheiten und insbesondere die Funktionsweise der in den Bremskreisen 74, 76 vorgesehen Fluidiksteuerelemente dem Fachmann wohl bekannt sind, wird auf eine nähere Erläuterung hier verzichtet.

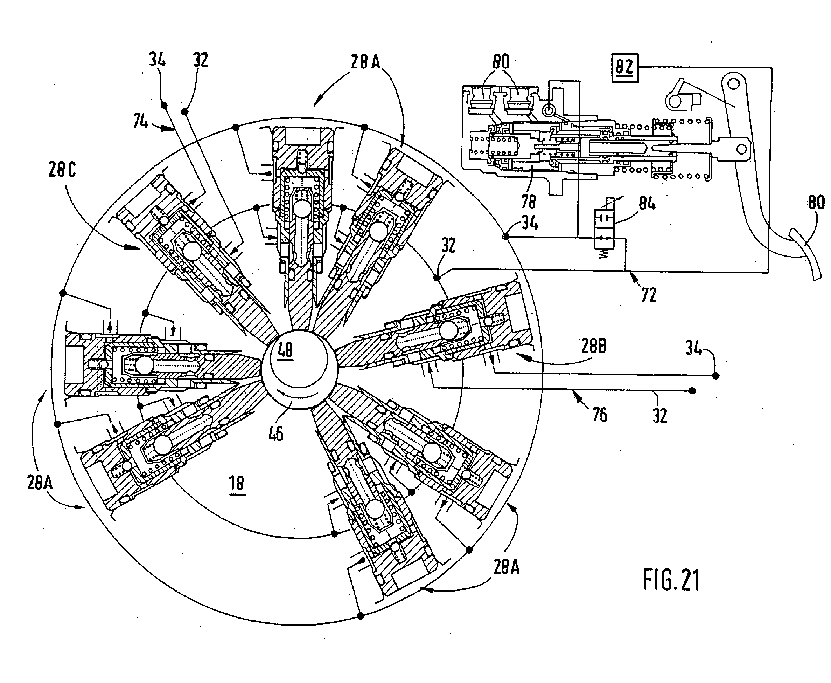

Fig. 21 zeigt schematisch die Anordnung der insgesamt acht Zylinder/Kolben-Anordnungen der in Fig. 20 dargestellten Fahrzeugbremsanlage 70, wobei die Bezugszeichen wie bei den vorhergehenden Ausführungsbeispielen verwendet werden. Deutlich zu erkennen ist, dass die beiden für die Hydraulikrückförderung vorgesehenen ABS- Zylinder/Kolben-Anordnungen 28B, 28C im Zylinderblock 18 (der nur schematisch dargestellt ist) zwischen jeweils zwei paarweise angeordneten Zylinder/Kolben-Anordnungen 28A für die Bremskraftverstärkung angeordnet sind. Vorteilhafterweise werden alle acht Zylinder/Kolben-Anordnungen 28A, 28B, 28C durch eine einzige Betätigungseinheit betätigt, von der in Fig. 21 nur die Motorwelle 48 sowie der Exzenter 46 dargestellt sind. Der in Fig. 21 dargestellte Ansatz gestattet es folglich, für drei unabhängige Hydraulikkreise lediglich einen Pumpenmotor vorzusehen.

Da für den Bremskraftverstärkerkreis 72 insgesamt sechs Zylinder/Kolben-Anordnungen 28A (das heißt eine "eigene" Mehrkolbenpumpe) vorgesehen sind, lässt sich ein ausreichender Bremsdruckaufbau erzielen, ohne dass auf einen Hoch- oder Mitteldruckspeicher zurückgegriffen werden müsste. Darüberhinaus entfallen hier weitere Komponenten wie ein Speicherladedrucksensor oder ein Speicher-Überdruck-ventil. Aufgrund der asynchronen Betätigung der im Bremskraftverstärkerkreis 72 vorgesehenen Zylinder/Kolben-Anordnungen 28A (mittels der den Exzenter 46 umfassenden Betätigungseinheit) werden Druckpulsationen im Bremsverstärkerkreis 72 soweit geglättet, dass der Fahrer beim Betätigen des Bremspedals 80 keine für ihn ungewohnten Rückwirkkräfte spürt. Da bei der ABS-Rückförderung Druckpulsationen tolerierbar sind, ist für jeden der Hydraulikkreise 74, 76 lediglich eine einzige Ventil/Kolben-Anordnung 28B, 28C vorgesehen.

Bei dem unter Bezugnahme auf die Fign. 20 und 21 erläuterten Druckerzeuger erfolgt die Druckregelung (nur noch) über ein Magnetventil, bei dem über eine PWM oder eine Stromregelung die magnetische Kraft eingestellt wird. Der Bremskraftverstärkerdruck stellt sich dann in Abhängigkeit von dem Abströmen über das Magnetventil ein.

Vorteilhaft hinsichtlich der Energiebilanz ist, dass der Druckerzeuger gemäß den Fign. 20 und 21 bei einer Bremskraftverstärkung lediglich den Druck erzeugen muss, den der Fahrer wünscht (dies sind in den meisten Fällen 5, 10, 20 und sehr selten 30 bar). Die Belastung des Druckerzeugers ist entsprechend gering. Er hat allerdings eine vergleichsweise lange Laufzeit, was jedoch für die Lebensdauer günstiger ist, als immer gegen hohe (Speicher-) Drücke fördern zu müssen. Der Druckerzeuger kann bei Druckhalte- und Druckabbauphasen auch abgeschaltet werden.

Wie sich aus der Beschreibung bevorzugter Ausführungsbeispiele ergeben hat, weisen die erfindungsgemäßen Druckerzeuger 10 eine Reihe von Vorteilen gegenüber herkömmlichen Druckerzeugern auf. Vorteilhaft ist beispielsweise die getrennte Handhabbarkeit der Pumpen-Unterbaugruppe 12 einerseits und des Aufnahmegehäuses 14 für die Unterbaugruppe 12 andererseits. Dieser modulare Ansatz gestattet das Durchführen von Service- oder Reparaturarbeiten an der Pumpen-Unterbaugruppe 12, ohne dass das Aufnahmegehäuse 14 von der Fahrzeugbremsanlage getrennt werden müsste.

Vorteilhaft ist ferner, dass der modulare Aufbau das Fertigen des Aufnahmegehäuses 14 und des Zylinderblocks 18 aus unterschiedlichen Materialen gemäß den jeweiligen Erfordernissen ermöglicht. So kann der Zylinderblock 18, der aufgrund der Bewegungen der Pumpkolben 28 in den Zylindern 49 hohen Belastungen ausgesetzt ist, aus einem besonders verschleißresistenten Material gefertigt werden, während das Aufnahmegehäuse 14, insbesondere wenn es wie im ersten Ausführungsbeispiel zusätzlich Fluidleit- und Fluidsteuerfunktionalitäten aufweist, aus einem leicht bearbeitbarem Material wie Aluminium gefertigt werden kann. Vorteilhaft ist ferner, dass sich bei der modularen Ausgestaltung Zylinderabschlusselemente wie Ventile oder Stopfen im Betrieb des Druckerzeugers am Aufnahmegehäuse abstützen können, so dass die Notwendigkeit von aufwendigen Verbindungstechniken entfällt.

## Patentansprüche

1. Druckerzeugersystem (10) für eine Fahrzeugbremsanlage, umfassend:
- eine Mehrzahl eigenständig handhabbarer Pumpen-Unterbaugruppen (12) mit unterschiedlichen Leistungsfähigkeiten und mit jeweils
i. einem Zylinderblock (18) mit wenigstens einem Einlass (32) für ein Hydraulikfluid und wenigstens einem Auslass (34) für das Hydraulikfluid, wobei in dem Zylinderblock (18) wenigstens ein Zylinder (49) ausgebildet ist, in dem ein Pumpkolben (28) aufgenommen ist; und mit
ii. einer Betätigungseinheit (20) für den Pumpkolben (28); und
- ein Gehäuse (14) zur wenigstens bereichsweisen Aufnahme einer ausgewählten der Pumpen-Unterbaugruppen (12), wobei der Zylinderblock (18) im Gehäuse (14) aufgenommen ist, wobei die Pumpen-Unterbaugruppe (12) mittels einer lösbaren Verbindung austauschbar in dem Gehäuse (14) befestigt ist und wobei das Gehäuse (14) wenigstens einen ersten Fluidanschluss (24) aufweist und den Einlass (32) oder den Auslass (34) mit dem ersten Fluidanschluss (24) verbindet.

2. Druckerzeugersystem nach Anspruch 1, **dadurch gekennzeichnet,**
**dass** der erste Fluidanschluss (24) für eine Fluidquelle (82) vorgesehen ist und mit dem Einlass (32) verbunden ist und dass das Gehäuse (14) wenigstens einen mit einem Hydraulikkreis (72, 74, 76) gekoppelten zweiten Fluidanschluss (24) aufweist, den das Gehäuse (14) mit dem Auslass (34) verbindet.

3. Druckerzeugersystem nach Anspruch 1 oder 2, **dadurch gekennzeichnet,**
**dass** der Zylinderblock (18) in einem an das Gehäuse (14) angrenzenden Bereich wenigstens eine Zylinderöffnung (26) aufweist.

4. Druckerzeugersystem nach Anspruch 3, **dadurch gekennzeichnet,**
**dass** die Zylinderöffnung (26) durch ein Abschlusselement (30; 60) oder durch das Gehäuse (14) begrenzt ist.

5. Druckerzeugersystem nach Anspruch 4 , **dadurch gekennzeichnet,**
**dass** das Abschlusselement (30; 60) im Betrieb des Druckerzeugersystems (10) am Gehäuse (14) abgestützt ist.

6. Druckerzeugersystem nach einem der vorhergehenden Ansprüche, **dadurch gekennzeichnet,**
**dass** in dem Zylinderblock (18) wenigstens zwei Zylinder (49) ausgebildet sind, in denen jeweils ein Pumpkolben (28) aufgenommen ist.

7. Druckerzeugersystem nach Anspruch 6, **dadurch gekennzeichnet,**
**dass** wenigstens vier Zylinder (49) sternförmig im Zylinderblock (18) ausgebildet sind.

8. Druckerzeugersystem nach Anspruch 6, **dadurch gekennzeichnet,**
**dass** die Zylinder (49) innerhalb des Zylinderblocks (18) parallel zueinander verlaufen.

9. Druckerzeugersystem nach einem der Ansprüche 6 bis 8, **dadurch gekennzeichnet,**
**dass** die Betätigungseinheit (20) die Pumpkolben (28) asynchron betätigt.

10. Druckerzeugersystem nach einem der vorhergehenden Ansprüche, **dadurch gekennzeichnet,**
**dass** die Fahrzeugbremsanlage (70) wenigstens einen Hydraulikkreis (72) umfasst, an den zwei oder mehr Zylinder/Kolben-Anordnungen (28A) angeschlossen sind.

11. Druckerzeugersystem nach einem der Ansprüche 6 bis 10, **dadurch gekennzeichnet, dass**, der Druckerzeugersystem (10) mit zwei oder mehr Hydraulikkreisen (72, 74, 76) koppelbar ist und im Zylinderblock (18) für jeden Hydraulikkreis (72, 74, 76) wenigstens eine Zylinder/Kolben-Anordnung (28A, 28B, 28C) vorgesehen ist.

12. Druckerzeugersystem nach Anspruch 11, **dadurch gekennzeichnet,**
**dass** im Zylinderblock (18) wenigstens eine Zylinder/Kolben-Anordnung (28A) für einen Bremskraftverstärkerkreis (72) und für zwei ABS-Kreise (74, 76) wenigstens je eine weitere Zylinder/Kolben-Anordnung (28B, 28C) ausgebildet ist.

13. Druckerzeugersystem nach einem der vorhergehenden Ansprüche, **dadurch gekennzeichnet,**
**dass** das Gehäuse (14) aus einem ersten Material und der Zylinderblock (18) aus einem vom ersten Material verschiedenen zweiten Material besteht.

14. Druckerzeugersystem nach einem der vorhergehenden Ansprüche, **dadurch gekennzeichnet,**
**dass** in dem Gehäuse (14) Fluidleitungen und Fluidsteuerelemente angeordnet sind.

15. Druckerzeugersystem nach einem der vorhergehenden Ansprüche, **dadurch gekennzeichnet,**
**dass** die Betätigungseinheit (20) ein eigenes Gehäuse (12) besitzt, das am Zylinderblock (18) befestigt ist.

16. Verfahren zur Montage eines Druckerzeugerssystem (10) in eine Fahrzeugbremsanlage, umfassend:
- Bereitstellen eines Gehäuses (14) zur Aufnahme wenigstens eines Abschnittes einer Pumpen-Unterbaugruppe (12), wobei das Gehäuse (14) wenigstens einen Fluidanschluss (24) aufweist;
- Bereitstellen einer Mehrzahl eigenständig handhabbarer Pumpen-Unterbaugruppen (12) mit unterschiedlichen Leistungsfähigkeiten und mit jeweils
i. einem Zylinderblock (18) mit wenigstens einem Einlass (32) für ein Hydraulikfluid und wenigstens einem Auslass (34) für das Hydraulikfluid, wobei in dem Zylinderblock(18) wenigstens ein Zylinder (49) ausgebildet ist, in dem ein Pumpkolben (28) aufgenommen ist; und
ii. einer Betätigungseinheit (20) für den Pumpkolben (28);
- Anschließen des Gehäuses (14) durch Verbinden des Fluidanschlusses (24) mit einer Fluidquelle (82) oder einem Hydraulikkreis (72, 74, 76); und
- Einfügen einer aus der Mehrzahl der Pumpen-Unterbaugruppen ausgewählten Pumpen-Unterbaugruppe (12) in das Gehäuse (14), wobei der Zylinderblock (18) im Gehäuse (14) aufgenommen wird, wobei der Einlass (32) oder der Auslass (34) mit dem Fluidanschluss (24) verbunden wird, und wobei die Pumpen-Unterbaugruppe (12) mittels einer lösbaren Verbindung austauschbar in dem Gehäuse (14) befestigt wird.

17. Verfahren nach Anspruch 16, **dadurch gekennzeichnet,**
**dass** die Pumpen-Unterbaugruppe (12) in das angeschlossene Gehäuse (14) eingefügt wird.

18. Verfahren nach Anspruch 16 oder 17, **dadurch gekennzeichnet**,
ferner umfassend den Schritt des Auswählens einer in das Gehäuse (14) einzufügenden Pumpen-Unterbaugruppe (12) in Abhängigkeit von der erforderlichen Leistungsfähigkeit.

19. Verfahren nach einem der Ansprüche 16 bis 18, ferner umfassend die weiteren Schritte des Ausbauens einer ersten Pumpen-Unterbaugruppe (12) aus dem angeschlossenem Gehäuse (14) und des Einfügens einer zweiten Pumpen-Unterbaugruppe (12) in das angeschlossene Gehäuse (14).

## Claims

1. A pressure generator system (10) for a vehicle brake system, comprising:
- a plurality of pump subassemblies (12), which can be handled individually, with different capacities and with, in each case,
i. a cylinder block (18) with at least one inlet (32) for a hydraulic fluid and at least one outlet (34) for said hydraulic fluid, wherein in said cylinder block (18) at least one cylinder (49) is arranged in which a pumping piston (28) is received; and with
ii. an actuating unit (20) for said pumping piston (28); and
- a housing (14) for receiving, at least partially, a selected pump subassembly of said pump assemblies (12), wherein the cylinder block (18) is received in the housing (14), wherein the pump subassembly (12) is fastened in a replaceable manner in said housing (14) by means of a detachable connection, and wherein said housing (14) has at least one first fluid connection (24) and connects the inlet (32) or outlet (34) to said first fluid connection (24).

2. The pressure generator system according to claim 1, **characterised in that**
the first fluid connection (24) is provided for a source of fluid (82) and is connected to the inlet (32), and that the housing (14) has at least one second fluid connection (24) which is coupled to a hydraulic circuit (72, 74, 76) and connects said housing (14) to the outlet (34).

3. The pressure generator system according to claim 1 or 2, **characterised in that**
the cylinder block (18) has at least one cylinder aperture (26) in a region adjoining the housing (14).

4. The pressure generator system according to claim 3, **characterised in that**
the cylinder aperture (26) is bounded by a closing element (30; 60) or by the housing (14).

5. The pressure generator system according to claim 4, **characterised in that**
the closing element (30; 60) is supported against the housing (14) when the pressure generator system (10) is in operation.

6. The pressure generator system according to one of the preceding claims, **characterised in that**
at least two cylinders (49), in each of which a pumping piston (28) is received, are arranged in the cylinder block (18).

7. The pressure generator system according to claim 6, **characterised in that**
at least four cylinders (49) are constructed in a star-shaped manner in the cylinder block (18).

8. The pressure generator system according to claim 6, **characterised in that**
the cylinders (49) run parallel to one another within the cylinder block (18).

9. The pressure generator system according to one of claims 6 to 8, **characterised in that**
the actuating unit (20) actuates the pumping pistons (28) asynchronously.

10. The pressure generator system according to one of the preceding claims, **characterised in that**
the vehicle brake system (70) comprises at least one hydraulic circuit (72), to which two or more cylinder/piston arrangements (28A) are connected.

11. The pressure generator system according to one of claims 6 to 10, **characterised in that**
the pressure generator system (10) can be coupled to two or more hydraulic circuits (72, 74, 76), and at least one cylinder/piston arrangement (28A, 28B, 28C) is provided in the cylinder block (18) for each hydraulic circuit (72, 74, 76).

12. The pressure generator system according to claim 11, **characterised in that**
there is constructed in the cylinder block (18) at least one cylinder/piston arrangement (28A) for a brake-force booster circuit (72) and at least one other cylinder/piston arrangement (28B, 28C) each for two ABS circuits (74, 76).

13. The pressure generator system according to one of the preceding claims, **characterised in that**
the housing (14) consists of a first material and the cylinder block (18) consists of a second material which is different from said first material.

14. The pressure generator system according to one of the preceding claims, **characterised in that**
fluid lines and fluid control elements are arranged in the housing (14).

15. The pressure generator system according to one of the preceding claims, **characterised in that**
the actuating unit (20) possesses a housing (12) of its own, which is fastened to the cylinder block (18).

16. A method for mounting a pressure generator system (10) in a vehicle brake system, comprising:
- providing a housing (14) for receiving at least one section of a pump subassembly (12), wherein said housing (14) has at least one fluid connection (24);
- providing of a plurality of pump subassemblies (12), which can be handled individually, with different capacities and with, in each case,
i. a cylinder block (18) with at least one inlet (32) for a hydraulic fluid and at least one outlet (34) for said hydraulic fluid, wherein in said cylinder block (18) at least one cylinder (49) is arranged in which a pumping piston (28) is received; and
ii. an actuating unit (20) for said pumping piston (28);
- connecting the housing (14) by the connection of the fluid connection (24) to a source of fluid (82) or to a hydraulic circuit (72, 74, 76); and
- inserting a pump subassembly (12), which has been selected from the plurality of pump subassemblies, in the housing (14), wherein the cylinder block (18) is received in said housing (14), wherein the inlet (32) or outlet (34) is connected to the fluid connection (24), and wherein the pump subassembly (12) is fastened in a replaceable manner in said housing (14) by means of a detachable connection.

17. The method according to claim 16, **characterised in that** the pump subassembly (12) is inserted in the connected housing (14).

18. The method according to claim 16 or 17, further comprising the step of selecting a pump subassembly (12), which is to be inserted in the housing (14), in dependence upon the capacity required.

19. The method according to one of claims 16 to 18, further comprising the additional steps of demounting a first pump subassembly (12) from the connected housing (14), and of inserting a second pump subassembly (12) in said connected housing (14).

## Revendications

1. Système générateur de pression (10) pour système de freinage de véhicule, comprenant :
- une pluralité de sous-modules de pompe (12) actionnables de manière autonome présentant des performances différentes et comportant respectivement
i. un bloc-cylindres (18) avec au moins une entrée (32) de fluide hydraulique et au moins une sortie (34) de fluide hydraulique, au moins un cylindre (49), dans lequel est logé un piston de pompe (28), étant aménagé dans le bloc-cylindres (18) ; et
ii. une unité d'actionnement (20) pour le piston de pompe (28) ; et
- un boîtier (14) destiné au logement au moins partiel d'un des sous-modules de pompe (12) choisi, le bloc-cylindres (18) étant logé dans le boîtier (14), le sous-module de pompe (12) étant fixé de manière amovible dans le boîtier (14) au moyen d'une jonction détachable et le boîtier (14) présentant au moins un premier raccord fluidique (24) et reliant l'entrée (32) ou la sortie (34) au premier raccord fluidique (24).

2. Système générateur de pression selon la revendication 1, **caractérisé en ce que**
le premier raccord fluidique (24) est prévu pour une source fluidique (82) et relié à l'entrée (32) et **en ce que** le boîtier (14) présente au moins un second raccord fluidique couplé à un circuit hydraulique (72, 74, 76) et relié par le boîtier (14) à la sortie (34).

3. Système générateur de pression selon la revendication 1 ou 2, **caractérisé en ce que**
le bloc-cylindres (18) présente dans une zone voisine du boîtier (14) au moins une ouverture de cylindre (26).

4. Système générateur de pression selon la revendication 3, **caractérisé en ce que**
l'ouverture de cylindre (26) est délimitée par un élément de terminaison (30 ; 60) ou par le boîtier (14).

5. Système générateur de pression selon la revendication 4, **caractérisé en ce que**
l'élément de terminaison (30 ; 60) s'appuie contre le boîtier pendant le fonctionnement du système générateur de pression.

6. Système générateur de pression selon l'une des revendications précédentes, **caractérisé en ce que**
au moins deux cylindres (49) dans lesquels est respectivement logé un piston de pompe (28) sont aménagés dans le bloc-cylindres (18).

7. Système générateur de pression selon la revendication 6, **caractérisé en ce que**
au moins quatre cylindres (49) sont aménagés en étoile dans le bloc-cylindres (18).

8. Système générateur de pression selon la revendication 6, **caractérisé en ce que**
les cylindres (49) s'étendent parallèlement les uns par rapport aux autres à l'intérieur du bloc-cylindres (18).

9. Système générateur de pression selon l'une des revendications 6 à 8, **caractérisé en ce que**
les pistons de pompe (28) sont actionnés de manière asynchrone par l'unité d'actionnement (20).

10. Système générateur de pression selon l'une des revendications précédentes, **caractérisé en ce que**
le système de freinage de véhicule (70) comprend au moins un circuit hydraulique (72) auquel sont raccordés deux dispositifs cylindre/piston (28A) ou plus.

11. Système générateur de pression selon l'une des revendications 6 à 10, **caractérisé en ce que**
le système générateur de pression (10) peut être couplé à deux circuits hydrauliques (72, 74, 76) ou plus et qu'au moins un dispositif cylindre/piston (28A, 28B, 28C) est prévu pour chaque circuit hydraulique (72, 74, 76) dans le bloc-cylindres (18).

12. Système générateur de pression selon la revendication 11, **caractérisé en ce que**
sont aménagés à l'intérieur du bloc-cylindres (18) au moins un dispositif cylindre/piston (28A) pour un circuit d'amplificateur de force de freinage (72) et au moins un dispositif cylindre/piston supplémentaire (28B, 28C) pour chacun des deux circuits ABS (74, 76).

13. Système générateur de pression selon l'une des revendications précédentes,
**caractérisé en ce que**
le boîtier (14) est composé d'une première matière et le bloc-cylindres (18) d'une seconde matière différente de la première matière.

14. Système générateur de pression selon l'une des revendications précédentes,
**caractérisé en ce que**
des conduites fluidiques et des éléments de commande de fluide sont disposés dans le boîtier (14).

15. Système générateur de pression selon l'une des revendications précédentes,
**caractérisé en ce que**
l'unité d'actionnement (20) possède son propre boîtier (12) lequel est fixé au bloc-cylindres (18).

16. Procédé pour monter un système générateur de pression (10) dans un système de freinage de véhicule, comprenant :
- la mise à disposition d'un boîtier (14) servant à loger au moins une partie d'un sous-module de pompe (12), le boîtier présentant au moins un raccord fluidique (24) ;
- la mise à disposition d'une pluralité de sous-modules (12) actionnables de manière autonome présentant des performances différentes et comportant respectivement
i. un bloc-cylindres (18) avec au moins une entrée (32) pour un fluide hydraulique et au moins une sortie (34) pour le fluide hydraulique, au moins un cylindre (49), dans lequel est logé un piston de pompe (48), étant aménagé dans le bloc-cylindres (18) ; et
ii. une unité d'actionnement (20) pour le piston de pompe (28) ;
- le raccordement du boîtier (14) par jonction du raccord fluidique (24) à une source fluidique (82) ou à un circuit hydraulique (72, 74, 76) ; et
- la mise en place dans le boîtier (14) d'un sous-module de pompe (12) sélectionné parmi une pluralité de sous-modules de pompe, le bloc-cylindres (18) étant logé dans le boîtier (14), l'entrée (32) ou la sortie (34) reliée au raccord fluidique (24), et le sous-module de pompe (12) fixé de manière amovible dans le boîtier (24) au moyen d'une jonction détachable.

17. Procédé selon la revendication 16, **caractérisé en ce que**
le sous-module de pompe (1) est incorporé dans le boîtier (14) raccordé.

18. Procédé selon la revendication 16 ou 17, comprenant en outre comme étape la sélection d'un sous-module de pompe (12) à incorporer dans le boîtier (14) en fonction de la performance requise.

19. Procédé selon l'une des revendications 16 à 18, comprenant en outre comme autres étapes le démontage d'un premier sous-module de pompe (12) du boîtier (14) raccordé et l'incorporation d'un deuxième sous-module de pompe (12) dans le boîtier (14) raccordé.
